# EUROPÄISCHE PATENTANMELDUNG

(11) **EP 4 382 490 A1**
(43) Veröffentlichungstag der Anmeldung: **12.06.2024**
(21) Anmeldenummer: 23209291.6
(22) Anmeldetag: 13.11.2023
(51) Int. Cl.: C01G 53/00, H01M 4/505, H01M 4/525

(54) **KATHODENMATERIAL, VERFAHREN ZU DESSEN HERSTELLUNG UND VERWENDUNG DES KATHODENMATERIALS**

(30) Priorität: 05.12.2022 DE 102022213054
(71) Anmelder: VOLKSWAGEN AG, 38440 Wolfsburg (DE)
(72) Erfinder: Lee, Hyomyoung, 44951 Ulsan (KR); Kim, Jun Hyeok, 44656 Ulsan (KR); Tang, Ruidie, 38114 Braunschweig (DE)

(57) **Zusammenfassung**

Es wird ein Kathodenmaterial angegeben, welches zusammengesetzt ist gemäß der Formel LiₓNa_{y}Ni_{1-z}Mn_{z}O_{2+a-b-c}F_{b}8_{c}, wobei 1,3 ≤ x ≤ 1,6; 0 < y ≤ 0,02; 0,5 ≤ z < 1; 0 < a ≤ 0,5; 0 < b ≤ 0,07; 0 < c ≤ 0,02. Weiter werden ein Verfahren zur Herstellung eines solchen Kathodenmaterials und eine Verwendung des Kathodenmaterials angegeben.

## Beschreibung

Die Erfindung betrifft ein Kathodenmaterial, ein Verfahren zu dessen Herstellung und eine Verwendung des Kathodenmaterials.

Ein Energiespeicher, auch als Batterie bezeichnet, weist allgemein eine Anzahl von Zellen auf, jeweils mit zwei Elektroden, nämlich einer Kathode und einer Anode. Die Elektroden weisen ein je nach Batterietyp geeignet ausgewähltes Kathoden- beziehungsweise Anodenmaterial auf. Eine Ladungsbewegung zwischen den Elektroden wird durch ein zusätzliches Elektrolyt ermöglicht. Ein Beispiel für einen Energiespeicher ist eine Lithium-Ionen-Batterie, mit einer oder mehreren Zellen auf Basis von Lithium. Solche Batterien finden unter anderem Verwendung als Energiespeicher in elektrisch angetriebenen Fahrzeugen, speziell Personenkraftwagen (PKW), Lastkraftwagen (LKW) und Motorrädern.

Verschiedene Kathodenmaterialien sind beispielsweise beschrieben in DE 10 2010 006 440 A1, DE 10 2015 211 110 A1 und EP 2 736 106 A2.

Vor diesem Hintergrund ist es eine Aufgabe der Erfindung ein verbessertes Kathodenmaterial anzugeben. Das Kathodenmaterial soll möglichst vorteilhafte elektrochemische Eigenschaften aufweisen und zugleich auch eine möglichst hohe praktische Anwendbarkeit, d.h. für eine tatsächliche Verwendung geeignet sein. Weiterhin soll ein Verfahren zur Herstellung eines solchen Kathodenmaterials angegeben werden.

Die Aufgabe wird erfindungsgemäß gelöst durch ein Kathodenmaterial mit den Merkmalen gemäß Anspruch 1, ein Verfahren mit den Merkmalen gemäß Anspruch 7 sowie durch eine Verwendung mit den Merkmalen gemäß Anspruch 10. Vorteilhafte Ausgestaltungen, Weiterbildungen und Varianten sind Gegenstand der Unteransprüche. Die Ausführungen im Zusammenhang mit dem Kathodenmaterial gelten sinngemäß auch für das Verfahren sowie die Verwendung und umgekehrt.

Das erfindungsgemäße Kathodenmaterial enthält die Elemente Lithium (Li), Natrium (Na), Nickel (Ni), Mangan (Mn), Sauerstoff (O), Fluor (F) und Schwefel (S). In einer geeigneten Ausgestaltung enthält das Kathodenmaterial darüber hinaus keine anderen Elemente und besteht dann ausschließlich aus den vorstehend explizit genannten Elementen. Alternativ ist aber zusätzlich zum Nickel noch eine Beimengung eines oder mehrerer anderer Übergangsmetalle (z.B. Cobalt) möglich. Geeigneterweise ist das Kathodenmaterial zusammengesetzt gemäß der Formel LiₓNa_{y}Ni_{1-z}Mn_{z}O_{2+a-b-c}F_{b}S_{c}, mit den Koeffizienten x, y, z, a, b und c, aus welchen sich gemäß der genannten Formel die Anzahlverhältnisse der einzelnen Elemente untereinander ergeben. Ein solches Kathodenmaterial wird auch als LMR-Kathodenmaterial bezeichnet (LMR = lithium manganese rich). Der Lithiumanteil x ist vorzugsweise größer als 1. Erfindungsgemäß ist das LMR-Kathodenmaterial mit Natrium und Fluor dotiert, wobei im Kristallgitter des Kathodenmaterials das Natrium teilweise Lithium ersetzt, d.h. an Lithiumpositionen angeordnet ist. Gleiches gilt für Nickel und Mangan, welche ebenfalls an Lithiumpositionen angeordnet sind und im Kristallgitter Lithium ersetzen. Analog ersetzt das Fluor teilweise Sauerstoff, d.h. ist an Sauerstoffpositionen angeordnet. Gleiches gilt für Schwefel, welcher ebenfalls an Sauerstoffpositionen angeordnet ist und im Kristallgitter Sauerstoff ersetzen.

Hinsichtlich der Zusammensetzung des fertigen Kathodenmaterials gilt vorzugsweise: 1,3 ≤ x ≤ 1,6; 0 < y ≤ 0,02; 0,5 ≤ z < 1; 0 < a ≤ 0,5; 0 < b ≤ 0,07; 0 < c ≤ 0,02. Geeignet ist insbesondere eine Ausgestaltung, bei welcher gilt: 1,3 < x < 1,5; 0 < y ≤ 0,01; 0,5 < z < 1; 0 < a < 0,5; 0 < b ≤ 0,04; 0 < c ≤ 0,01. Ganz besonders bevorzugt ist eine Ausgestaltung, bei welcher gilt: x = 1,407; y = 0,0026; z = 0,64; a = 0,413 (d.h. 2+a-b-c = 2.387); b = 0,02; c = 0,006. Diese Ausgestaltung wird auch als "beste Ausgestaltung" oder "Ausgestaltung 0)" bezeichnet und hat sich in Versuchen als besonders leistungsfähig herausgestellt, d.h. weist besonders vorteilhafte elektrochemische Eigenschaften auf und ist auch für praktische Anwendungen besonders geeignet. Alternativ sind auch die folgenden fünf Ausgestaltungen geeignet, für welche gilt:
Ausgestaltung 1): x = 1,413; y = 0,012; z = 0,65; a = 0,409 (d.h. 2+a-b-c = 2.376); b = 0,02; c = 0,013;
Ausgestaltung 2): x = 1,415; y = 0,005; z = 0,65; a = 0,422 (d.h. 2+a-b-c = 2.367); b = 0,05; c = 0,005;
Ausgestaltung 3): x = 1,512; y = 0,006; z = 0,65; a = 0,433 (d.h. 2+a-b-c = 2.386); b = 0,04; c = 0,007;
Ausgestaltung 4): x = 1,432; y = 0,015; z = 0,65; a = 0,43 (d.h. 2+a-b-c = 2.365); b = 0,06; c = 0,005;
Ausgestaltung 5): x = 1,421; y = 0,013; z = 0,65; a = 0,399 (d.h. 2+a-b-c = 2.375); b = 0,05; c = 0,019.

Die elektrochemischen Eigenschaften und damit die Leistungsfähigkeit der vorgenannten Ausgestaltungen 1) bis 5) und der besten Ausgestaltung sind in der nachfolgenden Tabelle 1 zusammengefasst:

**Tabelle 1**

| | **Ladekapazität [mAh/g]** | **Entladekapazität [mAh/g]** | **Entladekapazität / Ladekapazität [%]** | **Zyklenfestigkeit (cycle retention) über 50 Zyklen und bei 45°C [%]** |
|---|---|---|---|---|
| beste Ausgestaltung | 318,1 | 270,2 | 84,9 | 98,1 |
| Ausgestaltung 1) | 324,1 | 267,7 | 82,6 | 95,2 |
| Ausgestaltung 2) | 315,1 | 265,1 | 84,1 | 96,0 |
| Ausgestaltung 3) | 332,5 | 266,4 | 80,1 | 95,6 |
| Ausgestaltung 4) | 316,7 | 262,3 | 82,8 | 95,9 |
| Ausgestaltung 5) | 332,5 | 267,4 | 80,4 | 96,6 |

Die Messergebnisse der Tabelle 1 basieren auf einer Elektrodendichte von 3,2 g/cm und einer Grenzspannung von 2,5 V bis 4,7 V.

Nach der Herstellung liegt das Kathodenmaterial insbesondere in Form eines Konglomerats mit einer Vielzahl an Partikeln vor, welche jeweils eine Partikelgröße aufweisen. Die Partikelgröße ist insbesondere ein mittlerer Durchmesser eines jeweiligen Partikels. Alle Partikelgrößen bilden eine Verteilung, aus welcher eine mittlere Partikelgröße des Kathodenmaterials insgesamt ableitbar ist, z.B. als Mittelwert, Medianwert oder Verteilungsmaximum aller Partikelgrößen. Vorzugsweise weist das Kathodenmaterial eine mittlere Partikelgröße im Bereich von 0,5 µm bis 5 µm auf, besonders bevorzugt im Bereich von 1 µm bis 2 µm. Dadurch weist das Kathodenmaterial eine verbesserte Morphologie auf, speziell für praktische Anwendungen.

Das Kathodenmaterial weist auch eine Elektrodendichte auf, welche die Dichte des Kathodenmaterials an sich angibt. Vorzugsweise weist das Kathodenmaterial eine Elektrodendichte im Bereich von 3,0 g/cm² bis 3,5 g/cm² auf, z.B. 3,2 g/cm².

Die Partikel des Kathodenmaterials sind vorzugsweise jeweils ein Einkristall, d.h. die einzelnen Partikel sind monokristallin und gerade nicht polykristallin. Das Kathodenmaterial wird dann auch insgesamt als monokristallin (single crystalline) bezeichnet. Dadurch weist das Kathodenmaterial eine verbesserte Morphologie auf. Im Vergleich zu einem polykristallinen Kathodenmaterial ist das monokristalline Kathodenmaterial weniger bruchempfindlich, d.h. kollabiert weniger einfach, was speziell für das Kalandrieren des Kathodenmaterials im Rahmen der Herstellung einer Kathode für eine Zelle von Vorteil ist. Das Kalandrieren kann nun mit erhöhtem Anpressdruck erfolgen, sodass eine höhere Elektrodendichte erzielt wird. Auch beim Pressen der Kathode während der Herstellung der Zelle, z.B. beim Pressen eines Elektrodenstapels aus mehreren Kathoden und Anoden, ist das monokristalline Kathodenmaterial von Vorteil, um ein Kollabieren und eine daraus resultierende große, aktive Fläche für Nebenreaktionen zu vermeiden.

Der Erfindung liegt zunächst die Beobachtung zugrunde, dass die Verwendung von Lithiumlonen-Batterien als Energiespeicher in elektrisch angetriebenen Fahrzeugen durch den zur Verfügung stehenden Bauraum beschränkt ist und dies im Konflikt mit einer möglichst hohen Reichweite für das Fahrzeug, d.h. einem möglichst großen Energiespeicher, steht. Daher ist es vorteilhaft, möglichst die Speicherdichte des Energiespeichers zu erhöhen, um bei gleichem Bauraum eine höhere Reichweite zu erzielen. Ein grundsätzlich geeignetes Kathodenmaterial für einen Energiespeicher ist mit Nickel angereichert und weist dann allerdings eine eher geringe theoretische Kapazität von 240 mAh/g auf. Zudem wird der Rohstoff Nickel (und auch vergleichbare Rohstoffe wie Cobalt) zunehmend teurer. Entsprechend ist es wünschenswert, günstigere und zugleich chemisch möglichst vorteilhaftere Alternativen für Kathodenmaterialien zu finden. Solche alternativen Kathodenmaterialien sind Lithium-Mangan-reiche (LMR = lithiummanganese rich) Kathodenmaterialien, deren theoretische Kapazität mit 270 mAh/g oder mehr größer ist als bei den bereits genannten nickelangereicherten Kathodenmaterialien. Der hohe Mangananteil führt auch zu geringeren Kosten. Entsprechend ist das vorliegend vorgestellte Kathodenmaterial grundsätzlich ein LMR-Kathodenmaterial.

LMR-Kathodenmaterialien weisen jedoch auch diverse Nachteile auf. So beträgt die mittlere Partikelgröße des Kathodenmaterials regelmäßig nur etwa 200 nm oder weniger und das Kathodenmaterial kollabiert sehr schnell, d.h. ist wenig robust. Dadurch ist es schwierig, die Elektrodendichte zu erhöhen, was sich in einer geringen volumetrischen Energiedichte (in Wh/l) niederschlägt. Außerdem ergeben sich speziell durch Kollabieren des Kathodenmaterials unerwünschte Nebenreaktionen mit dem Elektrolyt und daraus resultierende, unerwünschte Effekte, wie z.B. Bruch und Pulverisierung des Kathodenmaterials, elektrische Isolation, Auflösung von Übergangsmetallen im Kathodenmaterial und kontinuierliche Bildung einer sogenannten SEI-Schicht (solid electrolyte interphase layer). Insgesamt ergeben sich daraus verschlechterte elektrochemische Eigenschaften, beispielsweise eine kontinuierliche Abnahme der mittleren Zellspannung, Gasbildung, Erhöhung des internen, elektrischen Widerstands, verminderte Zyklenfestigkeit und eine drastische Abnahme der Kapazität. Letztere ist insbesondere das Resultat einer irreversiblen Sauerstoff-Aktivität bei hoher Grenzspannung (cutoff voltage, z.B. > 4,4 V).

Zusätzlich zu morphologischen Herausforderungen bei LMR-Kathodenmaterialien ergeben sich weitere Herausforderungen hinsichtlich der Struktur der Kathode. Allgemein weist die Kristallstruktur eines LMR-Kathodenmaterials eine LiMnO₂-Komponente (R-3m Struktur) und eine monokline Li₂MnO₃-Komponente (C2/m Struktur) auf. Die Aktivierung der Li₂MnO₃-Komponente ist verantwortlich für die hohe Kapazität bei der erstmaligen Ladung einer Zelle mit LMR-Kathodenmaterial. Da dies aber bei hoher Spannung (> 4,4 V) erfolgt, ergeben sich wie bereits angedeutet zugleich eine hohe strukturelle Instabilität sowie Herausforderungen hinsichtlich der Spannungshysterese, einer anfänglich geringen Coulomb-Effizienz (CE), Gasentwicklung, Auflösung des Mangans usw.

Die genannten Nachteil und Herausforderungen sind vorteilhaft auf verschiedene Weise adressierbar, entsprechend geeignete Maßnahmen sind unabhängig voneinander realisierbar und lassen sich in die folgenden Kategorien einteilen: 1) Oberflächenvorbehandlung, 2) Optimierung der Zusammensetzung, 3) Dotierung und 4) Oberflächenbeschichtung. Im Rahmen einer Oberflächenvorbehandlung ist es vorteilhaft, die Oberfläche der Struktur des Kathodenmaterials hin zu einer Spinell-Struktur zu verändern, um die Diffusion von Lithiumionen zu erhöhen und den internen, elektrischen Widerstand zu verringern. Dadurch ergeben sich eine hohe, anfängliche Entladekapazität und eine hohe Coulomb-Effizienz sowie eine besonders gute Zyklenfestigkeit. Eine geeignete Möglichkeit zur Optimierung der Zusammensetzung des Kathodenmaterials ist eine Veränderung des Anteils an Lithium sowie des Nickel-Mangan-Verhältnisses, mit dem Ziel, eine möglichst geeignete Zusammensetzung des Kathodenmaterials hinsichtlich der Sauerstoffaktivität (speziell Sauerstoffverlust) beim erstmaligen Laden der Zelle zu finden und dadurch die anfängliche Kapazität und Coulomb-Effizienz zu erhöhen. Eine Dotierung und/oder Oberflächenbeschichtung ist vorteilhaft hinsichtlich der praktischen Anwendbarkeit des Kathodenmaterials, d.h. einer Anwendung über den Labormaßstab oder über Testaufbauten hinaus. Dem liegt die Beobachtung zugrunde, dass ein LMR-Kathodenmaterial einen besonders komplexen elektrochemischen Mechanismus aufweist, wodurch die Feinstruktur des Kathodenmaterials eine besondere Bedeutung für dessen praktische Anwendbarkeit und spezifische Kapazität hat. Insbesondere die bereits genannte, sehr geringe Partikelgröße im Nanometerbereich und die Eigenschaft, einfach zu kollabieren (hohe Bruchempfindlichkeit), ergeben eine besonders große, aktive Fläche zur Reaktion mit dem Elektrolyt innerhalb der Zelle. Eine Oberflächenbeschichtung erhöht dann vorteilhaft die Oberflächenstabilität der Kathode und reduziert das Ausmaß unerwünschter Nebenreaktionen mit dem Elektrolyt. Vorteilhaft ist auch ein zusätzlicher Beschichtungs-Precursor, um die Sauerstoffentwicklung zu hemmen und Lücken zu erhalten, welche dennoch durch Sauerstoff-Aktivität (d.h. entweichenden Sauerstoff) entstehen. Dadurch lässt sich der Anteil an irreversiblem Kapazitätsverlust reduzieren. Eine Dotierung erhöht schließlich vorteilhaft die interne Stabilität der Kathode, wodurch eine Abnahme der Kapazität und der mittleren Zellspannung mit zunehmender Zyklenzahl vermindert wird. Die Abnahme der Zellspannung ergibt sich allgemein aus der Migration des Übergangsmetalls im Kathodenmaterial bei hoher Ladung durch eine Transformation von einer Schicht- zu einer Spinell-Struktur. Wenn nun bei der Herstellung, insbesondere Kalzinierung, des Kathodenmaterials dieses im Rahmen einer Dotierung mit einem Fremdstoff dotiert wird, hemmt dieser Fremdstoff vorteilhaft die Transformation von Schicht- zu Spinell-Struktur speziell bei zunehmender Zyklenzahl und reduziert den Widerstand dabei.

Eine oder mehrere und vorzugsweise alle der genannten Maßnahmen ergeben ein LMR-Kathodenmaterial mit besonders guten elektrochemischen Eigenschaften, allerdings ist die Leistungsfähigkeit hinsichtlich der praktischen Anwendbarkeit, z.B. Verwendung in einem Energiespeicher zum Antrieb eines elektrisch angetriebenen Fahrzeugs, weiterhin möglicherweise eingeschränkt. Die beschriebene Oberflächenvorbehandlung, Optimierung der Zusammensetzung, Dotierung und Oberflächenbeschichtung verbessern zwar die elektrochemische Leistungsfähigkeit, allerdings lediglich für wenig anspruchsvolle Randbedingungen, wie beispielsweise geringe Massenbeladung (mass loading level), geringe Elektrodendichte, geringe C-Rate (d.h. dem Verhältnis von maximalem Lade-/Entladestrom in A zu Kapazität in Ah) und in einer Halbzellenkonfiguration (wie in einem Testaufbau). Für solche Randbedingungen ist das beschriebene, verbesserte LMR-Kathodenmaterial wenigstens gleichwertig zu üblichen nickelreichen Kathodenmaterialien. Eine praktische Anwendbarkeit bedingt jedoch andere Randbedingungen, insbesondere eine hohe Massenbeladung, eine hohe Elektrodendichte, eine hohe C-Rate und die Betrachtung einer vollständigen Zelle (d.h. nicht nur Halbzelle). Die geringe Partikelgröße von etwa 200 nm oder weniger bleibt nachteilig erhalten und die Kathode ist weiterhin bruchempfindlich und deren Struktur kollabiert bereits bei geringem Anpressdruck und somit erst recht beim Kalandrieren. Diese intrinsischen Merkmale führen dazu, dass eine hohe Elektrodendichte schwierig zu erreichen ist, wodurch trotz einer hohen spezifischen Kapazität (> 270 mAh/g) eine lediglich geringe volumetrische Energiedichte erzielt wird. Durch die weiterhin bestehende geringe Partikelgröße und die hohe Bruchempfindlichkeit ist die aktive Fläche besonders groß und ermöglicht somit unerwünschte Nebenreaktionen, Gasentwicklung und kontinuierliche Kapazitäts- sowie Spannungsreduzierung im Verlauf über mehrerer Zyklen, wie bereits beschrieben. Das Problem der geringen Partikelgröße und die damit einhergehenden Nachteile werden vorzugsweise durch eine monokristalline (single crystalline) Konfiguration des Kathodenmaterials behoben, d.h. das Kathodenmaterial ist dann ein monokristallines LMR-Kathodenmaterial. Außerdem sollte das Kathodenmaterial für eine praktische Anwendbarkeit auch entsprechend relevante Tests wie HPPC (hybrid pulse power characterization) bestehen, möglichst wenig Gas entwickeln und bei hoher Temperatur und einem SOC (state of charge) im Bereich von 80 % bis 100 % noch sicher sein.

Einer oder mehrere der vorgenannten Nachteile werden durch das erfindungsgemäße Kathodenmaterial vorteilhaft behoben. Dieses Kathodenmaterial weist exzellente elektrochemische Eigenschaften auf und ist auch für praktische Anwendungen besonders gut geeignet. Insbesondere zeichnet sich das Kathodenmaterial auch durch eine erhöhte Partikelgröße, Bruchfestigkeit und Elektrodendichte aus.

Das erfindungsgemäße Kathodenmaterial wird allgemein aus LiNiMnO hergestellt, d.h. bei der Herstellung wird Lithium-Nickel-Mangan-Oxid als Ausgangsmaterial verwendet (das LiNiMnO wird auch als Precursor bezeichnet). Dieses wird mit Natrium, Fluor und Schwefel als weitere Ausgangsmaterialien der Herstellung dotiert (Natrium, Fluor und Schwefel werden auch als Dotierstoffe bezeichnet). Mit anderen Worten: einzelne Atome des LiNiMnO werden durch Fremdatome ersetzt, diese Fremdatome sind Natrium, Fluor und Schwefel. Die Beimengung von Natrium, Fluor und Schwefel führt zu einer erhöhten Energiedichte und einer verbesserten Sicherheit bei hoher Temperatur während der Verwendung. Da ein Natriumatom größer ist als ein Lithiumatom führt das Natrium zudem vorteilhaft zu einer Vergrößerung der Struktur (genauer des ursprünglich vom Lithium eingenommenen Raumbereichs) und unterstützt dadurch die Diffusion von Lithiumionen beim Laden und Entladen. Das Fluor und der Schwefel hingegen binden vorteilhaft besonders stark an den noch verbleibenden Sauerstoff und verringern dadurch dessen Aktivität, d.h. der Sauerstoffverlust insbesondere bei der Verwendung des Kathodenmaterials wird reduziert, zugleich wird die Stabilität der Kathode insgesamt verbessert.

Das Natrium, das Fluor und der Schwefel werden jeweils entweder elementar oder als Verbindung mit einem oder mehreren anderen Elementen hinzugefügt, welche dann aber vorzugsweise nicht in das Kathodenmaterial eingebaut werden, sondern lediglich als Hilfsstoffe für die Herstellung dienen. In einer bevorzugten Ausgestaltung werden die Ausgangsmaterialien, d.h. LiNiMnO, Natrium, Fluor und Schwefel, trocken gemischt. Dadurch ergibt sich ein trockenes Gemisch, welches dann weiterverarbeitet wird, insbesondere kalziniert wird, um das Kathodenmaterial zu erhalten.

Vorzugsweise wird das Kathodenmaterial durch eine sauerstofffreie Kalzinierung hergestellt, d.h. die Ausgangsmaterialien werden kalziniert, ohne dass dabei zusätzlich Sauerstoff zugeführt wird. Während der Kalzinierung erfolgt demnach keine Zufuhr von Sauerstoff. Bei der Kalzinierung dringt insbesondere das Natrium in Lithiumpositionen ein und ein Natriumatom ersetzt dort dann das jeweilige Lithiumatom. Analog dringen bei der Kalzinierung insbesondere das Fluor und der Schwefel in Sauerstoffpositionen ein und ein Fluoratom oder Schwefelatom ersetzt dort dann das jeweilige Sauerstoffatom.

Die beiden vorgenannten Konzepte der trockenen Mischung und der sauerstofffreien Kalzinierung stellen neuartige Konzepte für die Herstellung eines Kathodenmaterials dar und ergeben ein insbesondere wie oben beschrieben verbessertes Kathodenmaterial.

Das erfindungsgemäße Kathodenmaterial findet vorzugsweise Verwendung in einem Energiespeicher zur Versorgung eines elektrischen Antriebs eines elektrisch angetriebenen Fahrzeugs. Diese Verwendung stellt insbesondere auch eine praktische Anwendung des Kathodenmaterials dar.

Nachfolgend werden Ausführungsbeispiele der Erfindung anhand einer Zeichnung näher erläutert. Darin zeigen jeweils:
- Fig. 1: schematisch die Struktur eines Kathodenmaterials,
- Fig. 2: Kapazität als Funktion von Zyklenzahl für verschiedene Ausgestaltungen des Kathodenmaterials aus Fig. 1,
- Fig. 3: Widerstand als Funktion von SOC für verschiedene Ausgestaltungen des Kathodenmaterials aus Fig. 1,
- Fig. 4: Bilder für verschiedene Ausgestaltungen des Kathodenmaterials aus Fig. 1.

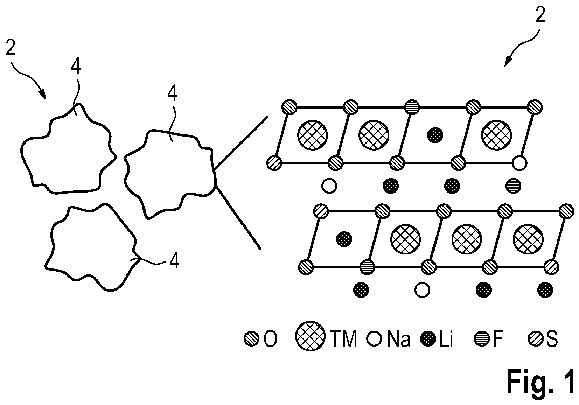

In Fig. 1 ist schematisch und ausschnittsweise die Struktur (d.h. Morphologie, Kristallstruktur) eines erfindungsgemäßen Kathodenmaterials 2 gezeigt. Das Kathodenmaterial 2 ist ein LMR-Kathodenmaterial 2 und enthält Lithium Li, Nickel Ni, Mangan Mn und Sauerstoff O und ist zusätzlich mit Natrium Na, Fluor F und Schwefel S dotiert. Links in Fig. 1 sind exemplarisch drei Partikel 4 gezeigt, rechts davon dann ausschnittsweise die zugehörige Kristallstruktur. Darin ist erkennbar, dass einzelne Lithiumpositionen durch Natrium Na besetzt sind. Außerdem sind einige Lithiumpositionen durch Nickel Ni und Mangan Mn besetzt, welche in Fig. 1 nicht unterschieden werden und stattdessen als Übergangsmetall TM bezeichnet sind. Analog sind Sauerstoffpositionen nicht ausschließlich mit Sauerstoff O besetzt, sondern ersatzweise auch mit Fluor F und Schwefel S.

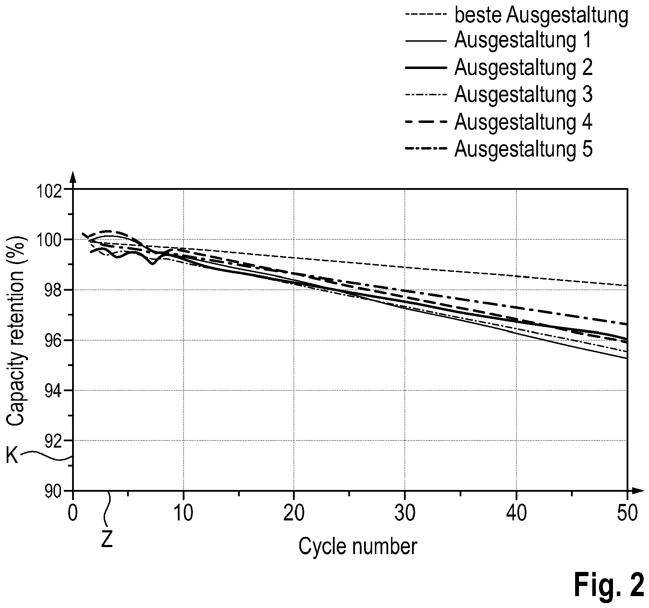

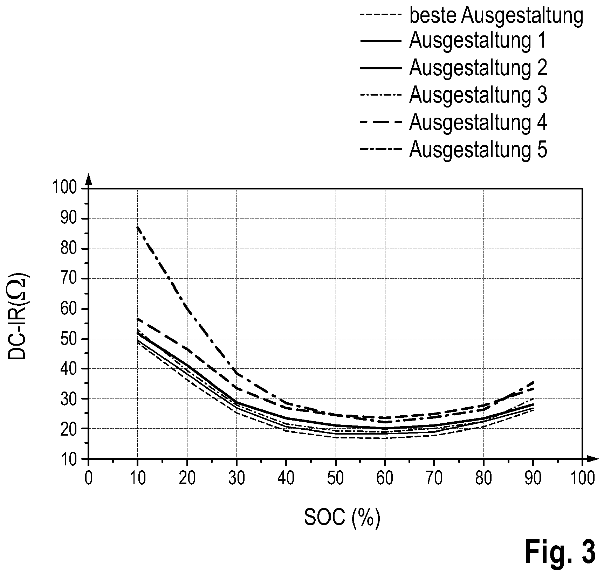

In den Fig. 2 und 3 sind Messergebnisse zu folgenden Ausgestaltungen für das Kathodenmaterial 2 gezeigt:
beste Ausgestaltung: x = 1,407; y = 0,0026; z = 0,64; a = 0,413 (d.h. 2+a-b-c = 2.387); b = 0,02; c = 0,006.
Ausgestaltung 1): x = 1,413; y = 0,012; z = 0,65; a = 0,409 (d.h. 2+a-b-c = 2.376); b = 0,02; c = 0,013;
Ausgestaltung 2): x = 1,415; y = 0,005; z = 0,65; a = 0,422 (d.h. 2+a-b-c = 2.367); b = 0,05; c = 0,005;
Ausgestaltung 3): x = 1,512; y = 0,006; z = 0,65; a = 0,433 (d.h. 2+a-b-c = 2.386); b = 0,04; c = 0,007;
Ausgestaltung 4): x = 1,432; y = 0,015; z = 0,65; a = 0,43 (d.h. 2+a-b-c = 2.365); b = 0,06; c = 0,005;
Ausgestaltung 5): x = 1,421; y = 0,013; z = 0,65; a = 0,399 (d.h. 2+a-b-c = 2.375); b = 0,05; c = 0,019.

Fig. 2 zeigt die Kapazität einer Zelle mit dem Kathodenmaterial 2, wobei die Kapazität K als Funktion der Zyklenzahl Z und relativ zur anfänglichen Kapazität angegeben ist (d.h. capacity retention). Klar erkennbar ist, dass das Kathodenmaterial 2 gemäß der besten Ausgestaltung die höchste Zyklenfestigkeit aufweist.

Fig. 3 zeigt den Widerstand DC-IR (DC-Widerstand) für das jeweilige Kathodenmaterial 2 als Funktion des SOC (state of charge). Dabei wird deutlich, dass das Kathodenmaterial 2 gemäß der besten Ausgestaltung insgesamt den geringsten Widerstand aufweist.

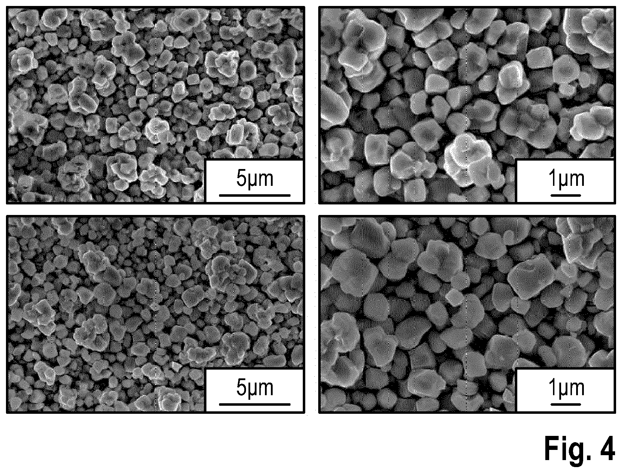

In Fig. 4 sind schließlich Bilder von Proben des Kathodenmaterials gemäß der besten Ausgestaltung (oben in Fig. 4) und der Ausgestaltung 1) (unten in Fig. 4) gezeigt, jeweils in zwei Vergrößerungsstufen. Deutlich erkennbar sind die verschiedenen Partikel 4. In jedem der vier Bilder ist ein Maßstab eingefügt, um die Partikelgröße zu verdeutlichen. Die Bilder wurden mit einem Rasterelektronenmikroskop (SEM) aufgenommen.

### Bezugszeichenliste

- 2: Kathodenmaterial
- 4: Partikel
- DC-IR: Widerstand
- F: Fluor
- K: Kapazität
- Li: Lithium
- Na: Natrium
- TM: Übergangsmetall (Nickel, Mangan)
- O: Sauerstoff
- S: Schwefel
- SOC: state of charge
- Z: Zyklenzahl

## Patentansprüche

1. Kathodenmaterial (2),
welches zusammengesetzt ist gemäß der Formel LiₓNa_{y}Ni_{1-z}Mn_{z}O_{2+a-b-c}F_{b}S_{c},
wobei
1,3 ≤ x ≤ 1,6;
0 < y ≤ 0,02;
0,5 ≤ z < 1;
0 < a ≤ 0,5;
0 < b ≤ 0,07;
0 < c ≤ 0,02.

2. Kathodenmaterial (2) nach Anspruch 1,
wobei
1,3 < x < 1,5;
0 < y ≤ 0,01;
0,5 < z < 1;
0 < a < 0,5;
0 < b ≤ 0,04;
0 < c ≤ 0,01.

3. Kathodenmaterial (2) nach Anspruch 1 oder 2,
wobei
x = 1,407;
y = 0,0026;
z = 0,64;
a = 0,413;
b = 0,02;
c = 0,006.

4. Kathodenmaterial (2) nach einem der Ansprüche 1 bis 3,
welches eine mittlere Partikelgröße im Bereich von 0,5 µm bis 5 µm aufweist, bevorzugt im Bereich von 1 µm bis 2 µm.

5. Kathodenmaterial (2) nach einem der Ansprüche 1 bis 4,
welches eine Elektrodendichte im Bereich von 3,0 g/cm² bis 3,5 g/cm² aufweist.

6. Kathodenmaterial (2) nach einem der Ansprüche 1 bis 5,
welches eine Vielzahl von Partikeln (4) enthält, welche jeweils ein Einkristall sind.

7. Verfahren zur Herstellung eines Kathodenmaterials (2) gemäß einem der Ansprüche 1 bis 6,
wobei das Kathodenmaterial (2) aus LiNiMnO hergestellt wird, welches mit Natrium (Na), Fluor (F) und Schwefel (S) dotiert wird.

8. Verfahren nach Anspruch 7,
wobei das LiNiMnO, das Natrium (Na), das Fluor (F) und der Schwefel (S) trocken gemischt werden.

9. Verfahren nach Anspruch 7 oder 8,
wobei das Kathodenmaterial (2) durch eine sauerstofffreie Kalzinierung hergestellt wird.

10. Verwendung eines Kathodenmaterials (2) nach einem der Ansprüche 1 bis 6 in einem Energiespeicher zur Versorgung eines elektrischen Antriebs eines elektrisch angetriebenen Fahrzeugs.
